# EUROPÄISCHE PATENTSCHRIFT

(11) **EP 0 749 380 B1**
(45) Veröffentlichungstag und Bekanntmachung des Hinweises auf die Patenterteilung: **30.12.1998**
(21) Anmeldenummer: 95915146.5
(22) Anmeldetag: 23.03.1995
(51) Int. Cl.: B60T 8/48

(54) **HYDRAULISCHE BREMSANLAGE MIT BREMSSCHLUPF- UND ANTRIEBSSCHLUPFREGELUNG**
HYDRAULIC BRAKING SYSTEM WITH BRAKE AND DRIVE SLIP CONTROL
SYSTEME DE FREINAGE HYDRAULIQUE A REGULATION ANTIPATINAGE ET ANTIBLOCAGE

(30) Priorität: 23.03.1994 DE 4409911
(43) Veröffentlichungstag der Anmeldung: 27.12.1996
(73) Patentinhaber: ITT Automotive Europe GmbH, 60488 Frankfurt am Main (DE)
(72) Erfinder: SONNENSCHEIN, Georg, D-65760 Eschborn (DE)
(86) Internationale Anmeldenummer: EP9501092
(87) Internationale Veröffentlichungsnummer: WO9525653

(56) Entgegenhaltungen:
- WO-A-92/05990
- DE-A- 4 001 421
- DE-A- 4 025 859
- DE-A- 4 132 469
- DE-A- 4 226 646

## Beschreibung

Die vorliegende Erfindung betrifft eine hydraulische Bremsanlage gemäß dem Oberbegriff des Anspruches 1.

Aus der DE-A 41 08 756 ist eine Bremsanlage bekannt, welche bei einer Bremsschlupfregelung nach dem Rückförderprinzip arbeitet, indem bei geschlossenem Umschaltventil durch Öffnen der Auslaßventile Druckmittel in den Niederdruckspeicher abgelassen wird, aus welchem es von der Rückförderpumpe durch die Druckleitung wieder zurück in die Bremsleitung gefördert wird. Zwischen dem Hauptzylinder und der Einmündung der Druckleitung in die Bremsleitung zweigt die Saugleitung von der Bremsleitung ab. Bei unbetätigter Bremse, also auch bei der Antriebesschlupfregelung ist das Umschaltventil in der Saugleitung geöffnet, so daß die selbstansaugend ausgelegte Rückförderpumpe Druckmittel über den Hauptzylinder aus dem Druckmittelbehälter ansaugen kann und in die Bremsleitung fördern kann. Damit das Druckmittel nicht wieder zurück in den Hauptbremszylinder verdrängt werden kann, wird das Trennventil zwischen der Einmündung der Druckleitung in die Bremsleitung und der Abzweigung der Saugleitung von der Bremsleitung geschlossen. Während der gesamten Antriebsschlupfregelphase arbeitet die Pumpe ununterbrochen. Ist der zur Antriebsschlupfregelung notwendige Förderdruck erreicht, öffnet ein dem Trennventil parallelgeschaltetes Überdruckventil zum Hauptzylinder hin. Die durch die ständige Volumenförderung über das Überdruckventil zum Hauptzylinder hin erbrachte Verlustleistung des Pumpenmotors bewirkt, daß der Pumpenmotor heißläuft und nur für weniger Druckaufbauphasen während der Antriebesschlupfregelung zur Verfügung steht.

Daher wurde in der DE-A 40 25 859 eine Bremsanlage der eingangs genannten Art vorgeschlagen, bei welcher die Pumpe durch eine an den Vorratsbehälter angeschlossene Ladepumpe ergänzt ist. Um hier eine Verlustleistung der Rückförderpumpe zu vermeiden, ist in die Verbindung zwischen der Ladepumpe und der Rückförderpumpe ein Sperrventil eingefügt, welches mit einer Steuerleitung versehen ist, deren Druck in Schließrichtung auf das Sperrventil einwirkt. Die Steuerleitung des Sperrventils ist mit einer Überdruckleitung verbunden, in welche ein Überdruckventil eingefügt ist, das dann öffnet, wenn der Förderdruck der Rückförderpumpe ein gewisses Maß übersteigt. Die Steuerleitung des Sperrventils ist also die meiste Zeit von der Druckleitung der Pumpe abgeschnitten und nur dann mit der Druckseite der Pumpe verbunden, wenn das Überdruckventil einen zu hohen Pumpendruck abläßt. Das Überdruckventil ist in Schließrichtung mit dem Hauptzylinderdruck beaufschlagt, so daß es sich nur bei unbetätigtem Hauptzylinder öffnen kann. Wenn während einer Antriebsschlupfregelung die Pumpe also einen zu hohen Druck erzeugt und dadurch heißzulaufen droht, öffnet das Überdruckventil und leitet den Förderdruck der Pumpe in die Steuerleitung des Sperrventils weiter. Das Sperrventil schließt sich, gleichfalls das Überdruckventil, da ein zweites Überdruckventil mit niedrigerem Öffnungsdruck eine weitere Verbindung der Überdruckleitung zum Druckmittelvorratsbehälter herstellt, so daß der Druck in der Druckleitung der Pumpe absinkt. Da aber der Schließdruck für das Sperrventil niedriger ist als der Öffnungsdruck des zweiten Überdruckventils, kann sich das Sperrventil erst dann wieder öffnen, wenn der Druck in der Steuerleitung sich über eine dem zweiten Überdruckventil parallel geschaltete Drossel abgebaut hat. Der Öffnungszeitpunkt des Sperrventils ist also nur davon abhängig, ob sich der Druck in seiner Steuerleitung, welcher von der Druckseite der Pumpe bei geschlossenem ersten Überdruckventil unabhängig ist, über die Drossel abgebaut ist. Dies kann einerseits bedeuten, daß zu einem Zeitpunkt, in dem die Einlaßventile sich zu einem weiteren Druckaufbau öffnen und somit der Druck in der Druckleitung absinkt, das Sperrventil noch geschlossen ist und die Pumpe kein Druckmittel nachfördern kann. Oder es kann sein, daß das Sperrventil sich aufgrund des abgesunkenen Druckes in der Steuerleitung schon öffnet, obwohl ein weiterer Druckaufbau an den Radbremsen noch gar nicht erforderlich ist.

Die Aufgabe der vorliegenden Erfindung besteht darin, eine Bremsanlage der eingangs genannten Art so zu gestalten, daß das Sperrventil an der Saugseite der Pumpe bedarfsgerecht öffnet und schließt.

Diese Aufgabe wird gelöst in Verbindung mit den kennzeichnenden Merkmalen des Hauptanspruchs. Durch eine permanente Verbindung einer Steuerkammer des Sperrventils mit der Druckleitung der Pumpe wird sichergestellt, daß einerseits das Sperrventil vom Druck in der Druckleitung geschlossen wird, aber andererseits auch bei Absinken des Drucks in der Druckleitung sofort geöffnet wird. Ein Abfall des Drucks in der Druckleitung wird beispielsweise durch Öffnen eines Einlaßventils zum Zwecke eines Druckaufbaus bewirkt. In diesem Moment steht sofort an der Saugseite der Pumpe Druckmittel zur Verfügung, da das Sperrventil unverzüglich öffnet.

Damit das Sperrventil sich mit Sicherheit nur während einer Antriebsschlupfregelung, aber nicht während einer Bremsschlupfregelung schließt, empfielt sich, dem Hauptzylinderdurck eine größere Wirkfläche zu verleihen als dem Förderdruck der Pumpe, wie in Anspruch 3 beschrieben ist.

Durch diese Maßnahme wird es ermöglicht, das Sperrventil direkt an die Saugseite der Pumpe zu setzen, wie Anspruch 4 beschreibt, da die Verbindung zum Niederdruckspeicher während einer Bremsschlupfregelung sichergestellt ist. Hierdruch läßt sich das Sperrventil ggf. in einem Pumpengehäuse integrieren.

Eine nähere Erläuterung des Erfindungsgedankens erfolgt nun anhand der Beschreibung von vier Figuren. Es zeigt:
- Fig. 1: eine erfindungsgemäße Bremsanlage,
- Fig. 2: ein Sperrventil, welches für eine Bremsanlage nach Fig. 1 geeignet ist,
- Fig. 3: eine zweite Ausführungsform einer erfindungsgemäßen Bremsanlage,
- Fig. 4: ein Sperrventil, welches für eine Bremsanlage nach Fig. 3 geeignet ist.

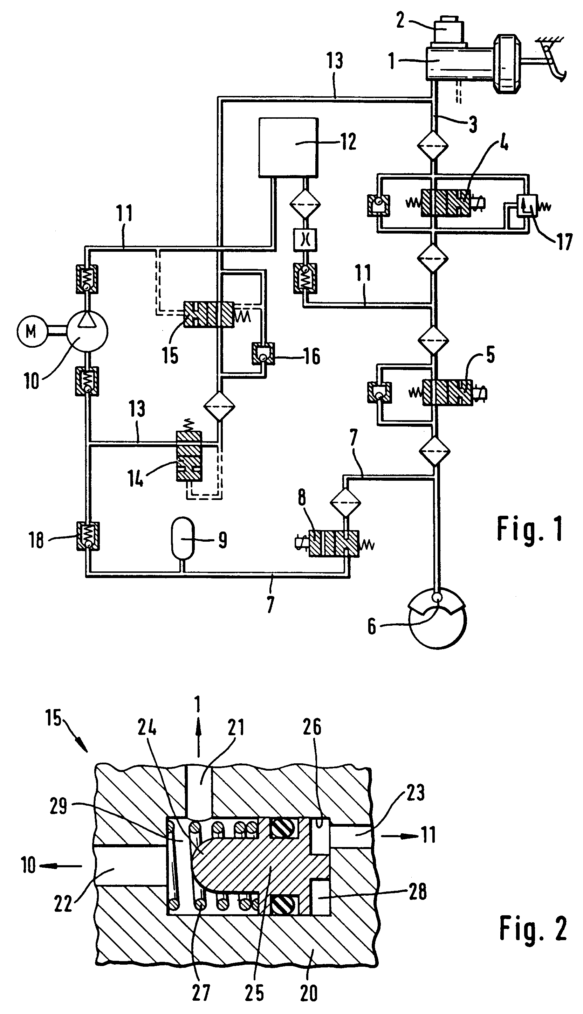

Der in Fig. 1 dargestellte hydraulische Schaltplan enthält nur die für die Beschreibung der Erfindung wesentlichen Elemente. Nicht dargestellt sind Sensoren und Auswerteelektronik, die zur Schlupfregelung erforderlich sind. Auch ist nur ein Bremskreis dargestellt, dessen üblicherweise mitversorgter zweiter Radbremszylinder der Übersichtlichkeit halber weggelassen ist.

Vom Hauptzylinder 1, der an den Druckmittelbehälter 2 angeschlossen ist, verläuft die Bremsleitung 3 über das elektromagnetisch betätigte, stromlos offene Trennventil 4 sowie das ebenfalls elektormagnetisch betätigte, stromlos offene Einlaßventil 5 zum Radzylinder 6. Von diesem führt die Rücklaufleitung 7 über das elektromagnetisch betätigte, stromlos geschlossene Auslaßventil 8 zum Niederdruckspeicher 9 und von diesem weiter zur Saugseite der Pumpe 10. Die Druckseite der Pumpe 10 ist über die Druckleitung 11 sowie über eine die Druckpulse der Pumpe dämpfende Dämpfungskammer 12 an die Bremsleitung 3 zwischen Trennventil 4 und Einlaßventil 5 angeschlossen. Zur Druckmittelansaugung während der Antriebsschlupfregelung besitzt die Pumpe 10 zusätzlich eine Saugleitung 13, die von der Bremsleitung 3 zwischen Hauptzylinder 1 und Trennventil 4 abzweigt und zur Saugseite der Pumpe 10 führt. In der Saugleitung 13 sind ein hydraulisch betätigtes, drucklos offenes Umschaltventil 14 sowie ein hydraulisch betätigtes, drucklos offenes Sperrventil 15 angelegt. Parallel zum Sperrventil 15 liegt ein Rückschlagventil 16, welches von der Saugseite der Pumpe 10 zum Hauptzylinder 1 hin öffnet.

Die Funktionsweise der Bremsanlage entspricht bei einer normalen pedalbetätigten Bremsung sowie bei einer Bremsschlupfregelung der einer aus dem Stand der Technik bekannten Bremsanlage.

Zu einer Antriebsschlupfregelung saugt die Pumpe 10 durch die Saugleitung 13 über das offene Umschaltventil 14 und das offene Sperrventil 15 sowie über den Hauptzylinder 1 aus dem Druckmittelbehälter 2 Druckmittel an. Hierzu ist das Trennventil 4 in der Bremsleitung 3 geschlossen. Das angesaugte Druckmittel wird von der Pumpe 10 durch die Druckleitung 11 über die Dämpfungskammer 12 in die Bremsleitung 3 unterhalb des Trennventils 4 und über das geöffnete Einlaßventil 5 in den Radzylinder 6 gefördert. Wenn der Bremsdruck in den Radzylinder 6 zur Begrenzung des Antriebsschlupfes ausreicht, schließt das Einlaßventil 5, so daß in der Bremsleitung 3 lediglich zwischen dem Trennventil 4 und dem Einlaßventil 5 Druck aufgebaut wird. Dieser Druck entspricht im wesentlichen dem an der Druckseite der Pumpe 10. Hat der Druck in der Druckleitung 11 einen vorgegebenen Wert erreicht, welcher über den zu einer Antriebsschlupfregelung erforderlichen Bremsdruck liegt, dann wird das Sperrventil 15 hydraulisch vom Druck in der Druckleitung geschlossen. Somit kann die Pumpe 10 kein Druckmittel mehr aus dem Druckmittelbehälter 2 nachsaugen. Wenn nach einer Druckabsenkung im Radzylinder 6 durch Öffnen des Auslaßventils 8 eine erneute Druckaufbauphase erforderlich wird, so öffnet wieder das Einlaßventil 5, und der Druck in der Druckleitung 11 sinkt ab. Hierdurch öffnet sich das Sperrventil 15 wieder, so daß die Pumpe 10 wieder einen Volumenstrom in die Druckleitung fördern kann.

Dem Trennvenil 4 ist ein Überdruckventil 17 parallelgeschaltet. Das dargestellte Überdruckventil 17 hat den Zweck, Druckmittel, welches auch bei geschlossenem Sperrventil 15 noch aus dem Radzylinder 6 zur Pumpe 10 hin abgelassen wird, zum Hauptzylinder 1 hin abzubauen. Der Vordruck des Überdruckventils 17 liegt höher als der Schließdruck des Sperrventils 15, damit die zuvor beschriebenen Nachteile einer permanenten Druckmittelförderung nicht auftreten.

Damit die selbstansaugende Pumpe 10 bei geschlossenem Sperrventil 15 nicht durch zu großen Druckabbau in der Rücklaufleitung 7 die Bremsbacken der Radbremsen zu weit zurückzieht und bei einer pedalbetätigten Bremsung einen großen Leerhub bewirkt, ist sicherheitshalber zwischen dem Niederdruckspeicher 9 und die Saugseite der Pumpe 10 in die Rücklaufleitung 7 ein Rückschlagventil 18 eingesetzt, dessen Vordruck bei etwa 1 bar liegt, so daß auch bei sehr starker Saugleistung der Pumpe der Druck in der Rücklaufleitung 7 immer zumindest so hoch ist wie der Atmosphärendruck.

Ein Beispiel für ein geeignetes Sperrventil 15 zeigt Fig. 2. Das Sperrventil 15 weist im Gehäuse 20 drei Druckmittelanschlüsse 21,22 und 23 auf, von denen der eine Anschluß 21 dem dem Hauptzylinder 1 zugewandten Abschnitt der Saugleitung 13 zugeordnet, während der zweite Anschluß 22 zur Saugseite der Pumpe 10 führt. Der dritte Druckmittelanschluß 22 steht mit der Druckleitung 11 in Verbindung. Die Verbindung zwischen den Druckmittelanschlüssen 21 und 22 wird über ein Sitzventil, dessen Schließglied 24 am Schwimmkolben 25 angeformt ist, kontrolliert. Der Schwimmkolben 25 liegt axial verschiebbar in der Gehäusebohrung 26 und wird von der Druckfeder 27 in Öffnungsrichtung des Ventils beaufschlagt. Er ist gegen die Gehäusebohrung 26 abgedichtet und trennt die mit dem Druckmittelanschluß 23 verbundene Steuerkammer 28 von der mit den Druckmittelanschlüssen 21 und 22 versehenen Ventilkammer 29.

In der Steuerkammer 28 steht also der Förderdruck der Pumpe an, während in der Ventilkammer 29 der jeweilige Hauptzylinderdruck herrscht. Der Förderdruck der Pumpe wirkt auf die gesamte Querschnittsfläche des Schwimmkolbens 25 in Schließrichtung des Ventils ein, während die Wirkfläche des Hauptzylinderdrucks sich aus der Differenz des Kolbenquerschnitts und der Schließfläche des Ventils ergibt. Der Druck am Druckmittelanschluß 22, welcher bei geöffnetem Umschaltventil 14 dem an der Saugseite der Pumpe entspricht, wirkt auf die Ventilschließfläche ein.

Durch diese Konstruktion ergibt sich, daß das Sperrventil 15 bei einer pedalbetätigten Bremsung bei Druckaufbau im Hauptzylinder 1 stets geöffnet ist, da auch die Druckfeder 27 in Öffnungsrichtung einwirkt und zusammen mit dem Hauptzylinderdruck auf den Schwimmkolben 25 eine größere Kraft als der Förderdruck der Pumpe 10 ausübt. Bei unbetätigtem Hauptzylinder hingegen steht die Ventilkammer 29 unter Atmosphärendruck, so daß der Förderdruck der Pumpe von der Steuerkammer 28 her den Schwimmkolben 25 in Schließrichtung des Ventils verschiebt und das Sperrventil 15 schließt. Dabei ist die Druckfeder 27 so hart ausgelegt, daß der Schwimmkolben 25 erst dann verschoben wird, wenn der Druck in der Steuerkammer 26 einen gewünschten Sollwert übersteigt. Sobald dieser Sollwert unterschritten wird, öffnet sich das Sperrventil 15 wieder.

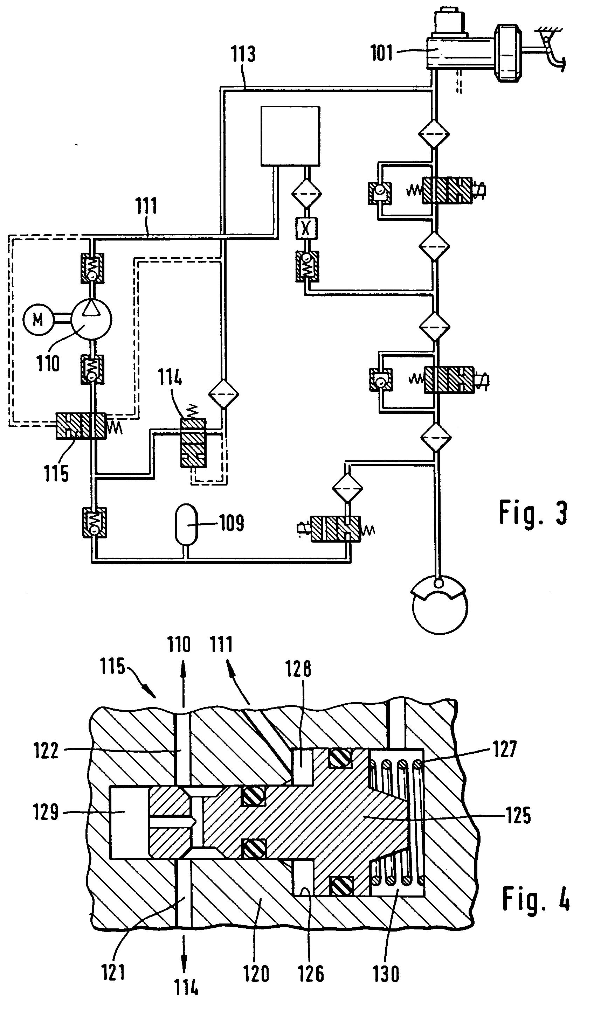

Die in Fig. 3 dargestellte Bremsanlage entspricht weitgehend der nach Fig. 1. Einander gleiche Teile der beiden Figuren tragen in Fig. 3 daher Bezugszeichen, die um 100 erhöht sind. Der einzige Unterschied besteht in der Anordnung des Sperrventils 115. Es liegt hier unmittelbar an der Saugseite der Pumpe 110, so daß beim Schließen des Sperrventils 115 sowohl der Druckmittelzulauf vom Hauptzylinder 101 her als auch der Zulauf vom Niederdruckspeicher 109 her abgesperrt wird. Hierbei ist es wichtig, daß der vom Hauptzylinder 101 her stammende, in Öffnungsrichtung des Sperrventils 115 wirkende Steuerdruck von einer Stelle in der Saugleitung 113 herangezogen wird, die zwischen dem Hauptzylinder 101 und dem Umschaltventil 114 liegt. Denn bei einer pedalbetätigten Bremsung wird das Umschaltventil 114 geschlossen, so daß zwischen dem Umschaltventil 114 und dem Sperrventil 115 nur ein niedriger Druck herrscht, welcher bei hohem Förderdruck der Pumpe 110 nicht in der Lage wäre, das Sperrventil 115 offen zu halten. Dies würde bedeuten, daß auch aus dem Niederspeicher 109 von der Pumpe 110 kein Druckmittel angesaugt werden könnte.

Eine konstruktive Lösung für das Sperrventil 115 zeigt Fig. 4. Außer den Kammer 128, der Steuerkammer, welche mit dem Förderdruck der Pumpe 110 beaufschlagt ist, und 129, der Ventilkammer, weist das Sperrventil 115 noch eine weitere Steuerkammer 130 auf, in welcher der Hauptzylinderdruck herrscht. In dieser zweiten Steuerkammer 130 ist auch die Druckfeder 127 angeordnet, welche in Ventilöffnungsrichtung wirkt. Das Sperrventil 115 besitzt im Gehäuse 120 eine gestufte Bohrung 126, in welcher ein Stufenkolben 125 zweifach abgedichtet und axial verschiebbar angeordnet ist. Der größere abgedichtete Kolbenquerschnitt begrenzt stirnseitig die Steuerkammer 130, während zwischen den beiden abgedichteten Kolbenquerschnitten, also im mittleren, die Kolbenstufe enthaltenden Axialabschnitts des Stufenkolbens 125 die Steuerkammer 128 angelegt ist. An der Kolbenstirnseite kleineren Querschnitts liegt die Ventilkammer 129, in welche die Druckmittelanschlüsse 121 und 122 einmünden. Die Verbindung dieser beiden Durckmittelanschlüsse zueinander wird über ein Schieberventil kontrolliert, dessen Steuerkante am Stufenkolben 125 angeformt ist.

Die separate Steuerkammer 130 ist deshalb erforderlich, weil während der Antriebsschlupfregelung der Hauptzylinder 101 zwar von der Saugseite der Pumpe 110 abgetrennt sein soll, jedoch der Hauptzylinderdruck öffnend auf das Sperrventil einwirken muß. Da der Hauptzylinderdruck in der Steuerkammer 130 die größte aller Wirkflächen besitzt, wird das Sperrventil 115 bei einer Pedalbremsung mit Sicherheit geöffnet. Der Förderdruck der Pumpe 110, welcher auf die Fläche der Kolbenstufe einwirkt, kann daher das Sperrventil 115 nur schließen, wenn der Hauptzylinder 101 drucklos ist und der Förderdruck ausreicht, um die Druckfeder 127 zu komprimieren. Ist dies der Fall, so verschiebt sich der Stufenkolben 125 gegen die Druckfeder 127, so daß die Steuerkante über die Druckmittelanschlüsse 121 und 122 fährt und die Druckmittelzufuhr zur Pumpe 110 gedrosselt wird. Hierdurch regelt das Sperrventil 115 den zur Pumpe 110 gelangenden Volumenstrom, selbstätig ab. Bei Berücksichtung der entsprechenden Flächenverhältnisse sind der konstruktiven Ausgestaltung des Sperrventils 115 keine Grenzen gesetzt. Es ist beispielsweise auch denkbar, ein Sitzventil zu verwenden, welches über einen Stößel offengehalten wird, wenn der Stufenkolben 125 sich im Ruhezustand befindet, der durch die Druckfeder 127 bestimmt ist.

### Bezugszeichenliste

- 1: Hauptzylinder
- 2: Druckmittelbehälter
- 3: Bremsleitung
- 4: Trennventil
- 5: Einlaßventil
- 6: Radzylidner
- 7: Rücklaufleitung
- 8: Auslaßventil
- 9: Niederdruckspeicher
- 10: Pumpe
- 11: Druckleitung
- 12: Dämpfungskammer
- 13: Saugleitung
- 14: Umschaltventil
- 15: Sperrventil
- 16: Rückschlagventil
- 17: Überdruckventil
- 18: Rückschlagventil
- 20: Gehäuse
- 21: Druckmittelanschluß
- 22: Druckmittelanschluß
- 23: Druckmittelanschluß
- 24: Schließglied
- 25: Schwimmkolben
- 26: Gehäusebohrung
- 27: Druckfeder
- 28: Steuerkammer
- 29: Ventilkammer
- 101: Hauptzylinder
- 109: Niederdruckspeicher
- 110: Pumpe
- 111: Druckleitung
- 113: Saugleitung
- 114: Umschaltventil
- 115: Sperrventil
- 120: Gehäuse
- 121: Druckmittelanschluß
- 122: Druckmittelanschluß
- 125: Stufenkolben
- 126: Stufenbohrung
- 127: Druckfeder
- 128: Steuerkammer
- 129: Ventilkammer
- 130: Steuerkammer

## Patentansprüche

1. Hydraulische Bremsanlage mit Bremsschlupf- und Antriebsschlupfregelung, mit einem Hauptzylinder (1,101), der an einen Druckmittelbehälter (2) angeschlossen ist, mit mindestens einem Radzylinder (6), der über eine Bremsleitung (3) mit dem Hauptzylinder (1,101) verbunden ist und zu einem angetriebenen Rad gehört, mit einer selbstansaugeden Pumpe (10,110), die mit ihrer Saugseite über eine Rücklaufleitung (7) an den Radzylinder (6) angeschlossen ist und mit ihrer Druckseite über eine Druckleitung (11,111) an die Bremsleitung (3) anschließt, mit einem Niederdruckspeicher (9,109) an der Rücklaufleitung (7), mit einem Einlaßventil (5) in der Bremsleitung (3) zwischen der Einmündung der Druckleitung (11,111) und dem Radzylinder (6), mit einem Auslaßventil (8) in der Rücklaufleitung (7) zwischen dem Radzylinder (6) und dem Niederdruckspeicher (9,109), mit einem Trennventil (4) in der Bremsleitung (3) zwischen dem Hauptzylinder (1,101) und der Einmündung der Druckleitung (11,111), mit einer Saugleitung (13,113), die die Saugseite der Pumpe (10,110) mit dem Druckmittelbehälter (2) verbindet, und mit einem Umschaltventil (14,114) in der Saugleitung (13,113), wobei in der Saugleitung (13) zusätzlich ein in Öffnungsrichtung federbelastetes Sperrventil (15,115) angeordnet ist, welches bei unbetätigtem Hauptzylinder (1,101) dann schließt, wenn der Förderdruck der Pumpe (10,110) einen vorgegebenen Wert überschreitet, dadurch **gekennzeichnet,** daß das Sperrventil (15,115) eine Steuerkammer (28,128) aufweist, welche direkt an der Druckseite der Pumpe (10,110) angeschlossen ist, deren Druck in Ventilschließrichtung wirkt.

2. Bremsanlage nach Anspruch 1, dadurch **gekennzeichnet,** daß auf das Sperrventil (15,115) der Hauptzylinderdruck in Öffnungsrichtung einwirkt.

3. Bremsanlage nach Anspruch 2, dadurch **gekennzeichnet,** daß der Hauptzylinderdruck eine größere Wirkfläche beaufschlagt als der Förderdruck der Pumpe (110).

4. Bremsanlage nach Anspruch 3, dadurch **gekennzeichnet,** daß die Rücklaufleitung in die Saugleitung (113) einmündet und das Sperrventil (115) zwischen der Einmündung der Rücklaufleitung und der Saugseite der Pumpe (110) liegt.

5. Bremsanlage nach einem der vorhergenden Ansprüche, dadurch **gekennzeichnet,** daß die Saugleitung (13,113) mit der Bremsleitung (3) zwischen Hauptzylinder (1,101) und Trennventil (4) verbunden ist.

## Claims

1. Hydraulic brake system with brake slip control and traction slip control, including a master cylinder (1,101) connected to a pressure fluid reservoir (2), at least one wheel cylinder (6) that is connected to the master cylinder (1,101) by way of a brake line (3) and associated with a driven wheel, a self-priming pump (10,110) connected with its suction side to the wheel cylinder (6) by way of a return line (7), and the pressure side of the pump being connected to the brake line (3) by way of a pressure line (11,111), a low-pressure accumulator (9,109) on the return line (7) having an inlet valve (5) in the brake line (3) between the port of the pressure line (11,111) and the wheel cylinder (6), an outlet valve (8) arranged in the return line (7) between the wheel cylinder (6) and the low-pressure accumulator (9,109), a separating valve (4) arranged in the brake line (3) between the master cylinder (1,101) and the port of the pressure line (11,111), a suction line (13,113) which connects the suction side of the pump (10,110) to the pressure fluid reservoir (2), and a change-over valve (14,114) arranged in the suction line (13,113), wherein in addition a shut-off valve (15,115) that is spring-loaded in the opening direction is arranged in the suction line (13) to close when the supply pressure of the pump (10,110) exceeds a predetermined value, with the master cylinder (1,101) not operated,
**characterized** in that a control chamber (28, 128) of the shut-off valve (15,115) is permanently connected to the pressure side of the pump (10,110) whose pressure acts in the valve closing direction.

2. Brake system as claimed in claim 1,
**characterized** in that the shut-off valve (15,115) is acted upon by the master cylinder pressure in the opening direction.

3. Brake system as claimed in claim 2,
**characterized** in that the master cylinder pressure acts upon a larger effective surface than the supply pressure of the pump (110).

4. Brake system as claimed in claim 3,
**characterized** in that the return line opens into the suction line (113), and the shut-off valve (115) is interposed between the port of the return line and the suction side of the pump (110).

5. Brake system as claimed in any one of the preceding claims,
**characterized** in that the suction line (13,113) is connected to the brake line (3) between the master cylinder (1,101) and the separating valve (4).

## Revendications

1. Système de freinage hydraulique à régulation antipatinage au freinage et antipatinage en traction, comprenant un maître-cylindre (1, 101) relié à un réservoir (2) de fluide de pression, comprenant au moins un cylindre de roue (6) relié au maître-cylindre (1, 101) par l'intermédiaire d'une conduite de frein (3) et appartenant à un roue motrice, comprenant une pompe autoamorcée (10, 110) dont le côté aspiration est relié au cylindre de roue (6) par l'intermédiaire d'une conduite de retour (7), et dont le côté refoulement est relié à la conduite de frein (3) par l'intermédiaire d'une conduite de pression (11, 111), comprenant un accumulateur basse pression (9, 109) monté sur la conduite de retour (7), comprenant une vanne d'admission (5) installée dans la conduite de frein (3), entre l'embouchure de la conduite de pression (11, 111) et le cylindre de roue (6), comprenant une vanne d'échappement (8) installée dans la conduite de retour (7) entre le cylindre de roue (6) et l'accumulateur basse pression (9, 109), comprenant une vanne d'isolement (4) installée dans la conduite de frein (3) entre le maître-cylindre (1, 101) et l'embouchure de la conduite de pression (11, 111), comprenant une conduite d'aspiration (13, 113) reliant le côté aspiration de la pompe (10, 110) au réservoir (2) de fluide de pression, et comprenant une vanne de commutation (14, 114) montée dans la conduite d'aspiration (13, 113), une vanne d'arrêt (15, 115), précontrainte par ressort dans le sens de l'ouverture, étant en outre disposée dans la conduite d'aspiration (13), cette vanne se fermant, si le maître-cylindre (1, 101) n'est pas actionné, dès que la pression de refoulement de la pompe (10, 110) dépasse une valeur prédéterminée,
caractérisé en ce que la vanne d'arrêt (15, 115) comporte une chambre de pilotage (28, 128) qui est branchée directement au côté refoulement de la pompe (10, 110), dont la pression agit dans le sens de la fermeture de la vanne.

2. Système de freinage selon la revendication 1, caractérisé en ce que la pression du maître-cylindre agit sur la vanne d'arrêt (15, 115) dans le sens de l'ouverture.

3. Système de freinage selon la revendication 2, caractérisé en ce que la pression du maître-cylindre agit sur une surface d'action plus grande que celle de la pression de refoulement de la pompe (110).

4. Système de freinage selon la revendication 3, caractérisé en ce que la conduite de retour débouche dans la conduite d'aspiration (113), et que la vanne d'arrêt (115) est située entre l'embouchure de la conduite de retour et le côté aspiration de la pompe (110).

5. Système de freinage selon l'une des revendications précédentes, caractérisé en ce que la conduite d'aspiration (13, 113) est reliée à la conduite de frein (3) entre le maître-cylindre (1, 101) et la vanne d'isolement (4).
